# EUROPEAN PATENT APPLICATION

(11) **EP 2 336 941 A1**
(43) Date of publication of application: **22.06.2011**
(21) Application number: 10750512.5
(22) Date of filing: 04.03.2010
(51) Int. Cl.: G06F 21/20, G06K 17/00, G06Q 50/00, H04L 9/32

(54) **FORM READER, FORM AUTHENTICATION METHOD, AND PROGRAM**

(30) Priority: 12.03.2009 JP 2009059220; 27.04.2009 JP 2009107789
(71) Applicant: Panasonic Corporation, Kadoma-shi Osaka 571-8501 (JP)
(72) Inventor: WAKAO, Satoru, Osaka-shi, Osaka 540-5207 (JP); SAKAKI, Jyunnichi, Osaka-shi, Osaka 540-5207 (JP)
(74) Representative: Kügele, Bernhard
(86) International application number: PCT/JP2010/001485
(87) International publication number: WO 2010/103754

(57) **Abstract**

A document reader device (4) acquires property information indicative of a specification for an IC chip (3) in a document (2), from an information server device (6). The document reader device (4) then transmits a certificate issuance request created based on the property information of the IC chip (3), to a certificate issuing server device (5). Upon receiving the electronic certificate issued based on the certificate issuance request from the certificate issuing server device (5), the document reader device (4) stores a plurality of electronic certificates corresponding to the specification for the IC chip (3) in a certificate memory (11). Furthermore, the document reader device (4) includes a history DB (10) configured to memorize history information on the result of authentication using each of the electronic certificates for each specification for the IC chip (3). The document reader device (4) selects an electronic certificate to be used for the authentication when the information is read from the IC chip (3) in the document to be read (2), from the plurality of electronic certificates based on the history information. Thus, in the document reader device according to the present invention configured to carry out authentication using the electronic certificates when the information is read from the IC chip in the document, time required for the authentication can be reduced.

## Description

### Technical Field

The present invention relates to a document reader device having a function to read information from an IC chip mounted in a document, and in particular, to a technique to carry out authentication using an electronic certificate when reading information from the IC chip.

### Background Art

In recent years, much effort has been made to put into practice documents (such as passports) with IC chips mounted therein. For example, for immigration and registration operations, authorities in the respective countries issue passports with IC chips mounted therein (electronic passports), and much effort has been made to install reader devices for electronic passports (electronic passport reader) in immigration authorities and the like. International standards are available for basic specifications for electronic passports. However, for operational aspects of the electronic passport which are entrusted to each country, the countries adopt different specifications. Thus, not all of the specification for the IC chip in the electronic passport is common to countries around the world. For example, a signature scheme (algorithm) and a signature parameter (a key length or a hash function) for an electronic signature that can be processed by the IC chip vary depending on the specification for the IC chip in the countries around the world. Furthermore, even for the same country, when a revised edition of the electronic passport is issued, the last edition of the electronic passport is often different from the latest edition of the electronic passport in the specification for the IC chip (a signature scheme, a signature parameter, or the like).

Conventionally, to allow information to be read from an electronic passport compliant with the specification used for a particular country, a technique has been proposed which utilizes country-oriented information stored in a reader device to determine a communication form (an antenna position, an encryption scheme, and a reading scheme) based on a nationality and a issue date read from an OCR (Optical Character Reading) area of the electronic passport (see, for example, Patent Literature 1).

However, with the conventional reader device, the specification (the signature scheme, the signature parameter, or the like) for the IC chip is not uniquely determined only by the nationality and issue date. Thus, attempts need to be made to authenticate each of the plurality of specifications used for the county, using the signature schemes or signature parameter in the specifications. Hence, the authentication requires a long time. In particular, in the EAC (Extended Access Control) of specifications for next-generation electronic passports based on the assumption that information (personal information and the like) stored in an IC chip for strict management is read out, a plurality of certificate authentications need to be carried out. Thus, the authentication requires a longer time.

### Citation List

### Patent Literature

Patent Literature 1: Japanese Patent Laid-Open No. 2007-249799 (p.7-8, Figure 7)

### Summary of Invention

### Technical Problem

The present invention has been developed against the above-described background. An object of the present invention is to provide a document reader device configured to carry out authentication using an electronic certificate when reading information from an IC chip mounted in a document, the document reader device enabling a reduction in time required for the authentication.

### Solution to Problem

An aspect of the present invention is a document reader device configured to use an electronic certificate to read information from an IC chip mounted in a document, the electronic certificate allowing the IC chip to authenticate the device that reads the information, the document reader device comprising a property information acquiring unit for acquiring property information of the IC chip indicative of a specification for the IC chip from an information server device configured to manage the property information, a certificate receiving unit for receiving an electronic certificate created based on the property information of the IC chip and corresponding to the specification for the IC chip, from a certificate issuing server device configured to issue the electronic certificate, a certificate storing unit for storing a plurality of electronic certificates corresponding to the specification for the IC chip, a history storing unit for storing history information on a result of authentication using each of the electronic certificates, for each specification for the IC chip, and a certificate selecting unit for selecting an electronic certificate to be used for the authentication when the information is read from the IC chip in the document to be read, from the plurality of electronic certificates based on the history information.

Another aspect of the present invention is a document authentication method carried out using an electronic certificate in order to read information from an IC chip mounted in a document, the electronic certificate allowing the IC chip to authenticate an device that reads the information, the document authentication method comprising acquiring property information of the IC chip indicative of a specification for the IC chip from an information server device configured to manage the property information, receiving an electronic certificate created based on the property information of the IC chip and corresponding to the specification for the IC chip, from a certificate issuing server device configured to issue the electronic certificate, storing a plurality of electronic certificates corresponding to the specification for the IC chip, memorizing history information on a result of authentication using each of the electronic certificates, for each specification for the IC chip, and selecting an electronic certificate to be used for the authentication when the information is read from the IC chip in the document to be read, from the plurality of electronic certificates based on the history information.

Another aspect of the present invention is a program executed by a document reader device configured to use an electronic certificate to read information from an IC chip mounted in a document, the electronic certificate allowing the IC chip to authenticate the device that reads the information, the program allowing a computer to execute a process of acquiring property information of the IC chip indicative of a specification for the IC chip from an information server device configured to manage the property information, a process of receiving an electronic certificate created based on the property information of the IC chip and corresponding to the specification for the IC chip, from a certificate issuing server device configured to issue the electronic certificate, a process of storing a plurality of electronic certificates corresponding to the specification for the IC chip, a process of memorizing history information on a result of authentication using each of the electronic certificates, for each specification for the IC chip, and a process of selecting an electronic certificate to be used for the authentication when the information is read from the IC chip in the document to be read, from the plurality of electronic certificates based on the history information.

As described below, the present invention includes many aspects. Thus, the disclosure of the present invention is intended to provide some of the aspects of the present invention and not to limit the scope of the present invention described and claimed herein.

### Brief Description of Drawings

[Figure 1] Figure 1 is a block diagram showing the configuration of a document authentication system according to a first embodiment of the present invention.
[Figure 2] Figure 2 is a block diagram showing the configuration of a document reader device according to the first embodiment of the present invention.
[Figure 3] Figure 3 is a diagram showing an example of history information.
[Figure 4] Figure 4 is a diagram showing an example of updating of property information.
[Figure 5] Figure 5 is a diagram showing another example of updating of property information.
[Figure 6] Figure 6 is a sequence diagram showing a flow of operation of a document authentication system according to the first embodiment of the present invention.
[Figure 7] Figure 7 is a block diagram showing the configuration of an update management system according to a second embodiment.
[Figure 8] Figure 8 is a block diagram showing the configuration of an update management device according to the second embodiment.
[Figure 9] Figure 9 is a diagram illustrating operation of the update management system according to the second embodiment.
[Figure 10] Figure 10 is a flowchart illustrating a flow of operation of the update management system according to the second embodiment.
[Figure 11] Figure 11 is a block diagram showing the configuration of an update management device according to a third embodiment.
[Figure 12] Figure 12 is a diagram illustrating operation of an update management system according to the third embodiment.
[Figure 13] Figure 13 is a flowchart illustrating a flow of operation of the update management system according to the third embodiment.

### Description of Embodiments

The present invention will be described below in detail. However, the following detailed description and the attached documents do not limit the present invention. Instead, the scope of the present invention is limited by the accompanying claims.

### (First Embodiment)

A document reader device according to the present invention uses an electronic certificate to read information from an IC chip mounted in a document; the electronic certificate allows the IC chip to authenticate the device that reads the information. The document reader device includes a property information acquiring unit for acquiring property information of the IC chip indicative of a specification for the IC chip from an information server device configured to manage the property information, a certificate receiving unit for receiving an electronic certificate created based on the property information of the IC chip and corresponding to the specification for the IC chip, from a certificate issuing server device configured to issue the electronic certificate, a certificate storing unit for storing a plurality of electronic certificates corresponding to the specification for the IC chip, a history storing unit for storing history information on a result of authentication using each of the electronic certificates, for each specification for the IC chip, and a certificate selecting unit for selecting an electronic certificate to be used for the authentication when the information is read from the IC chip in the document to be read, from the plurality of electronic certificates based on the history information.

In this configuration, when information is read from the IC chip in the document to be read, authentication is carried out using the appropriate electronic certificate selected based on the history information. Thus, the probability of successful authentication is increased. This reduces the time required for authentication using electronic certificates.

Furthermore, in the document reader device according to the present invention, the certificate selecting unit may be configured to select one of the electronic certificates in order of decreasing frequency of successes of authentication using each of the electronic certificates.

This configuration appropriately selects the electronic certificate used for authentication based on the history information. In this case, the authentication is carried out using electronic certificates in order of decreasing frequency of successes of authentication using each of the electronic certificates. Thus, the probability of successful authentication is increased. This reduces the time required for authentication using electronic certificates.

Furthermore, in the document reader device according to the present invention, the certificate selecting unit may be configured to randomly select the appropriate electronic certificate if the difference, among the electronic certificates, in the frequency of successes of authentication using each electronic certificate falls within a predetermined range.

This configuration appropriately selects the electronic certificate used for authentication based on the history information. If the difference, among the electronic certificates, in the frequency of success of authentication using each electronic certificate falls within the predetermined range, the authentication is carried out using the randomly selected electronic certificate.

Furthermore, in the document reader device according to the present invention, the property information includes a signature scheme or a signature parameter for an electronic signature which can be processed by the IC chip. The document reader device may include an update request transmitting unit for transmitting an update request for updated property information to the information server device.

In this configuration, when the property information of the IC chip is updated, the update request can be transmitted to the information server device to acquire the updated property information. Thus, authentication can be carried out using a new electronic certificate corresponding to the updated property information.

Furthermore, in the document reader device according to the present invention, the update request transmitting unit may be configured to transmit the update request if the frequency of failures of authentication using any of the electronic certificates is higher than a predetermined threshold.

In this configuration, if the frequency of failures of authentication using any of the electronic certificates increases (the property information may be outdated), updated property information can be appropriately acquired.

Furthermore, in the document reader device according to the present invention, the property information may include a signature scheme or a signature parameter for an electronic signature which can be processed by the IC chip. The document reader device may include an update information receiving unit for receiving updated property information from the information server device at a predetermined distribution timing specified by the information server device.

In this configuration, when the property information of the IC chip is updated, the property information (updated property information) distributed by the information server device can be received at the predetermined timing. Thus, authentication can be carried out using a new electronic certificate corresponding to the updated property information.

Furthermore, in the document reader device according to the present invention, the update information receiving unit may be configured such that when the property information managed by the information server device is updated, the update information receiving unit receives the updated property information.

In this configuration, when the property information managed by the information server device is updated, the document reader device can also appropriately acquire the updated property information.

The document authentication method according to the present invention is carried out using an electronic certificate in order to read information from an IC chip mounted in a document; the electronic certificate allows the IC chip to authenticate a device that reads the information. The document authentication method includes acquiring property information of the IC chip indicative of a specification for the IC chip from an information server device configured to manage the property information, receiving an electronic certificate created based on the property information of the IC chip and corresponding to the specification for the IC chip, from a certificate issuing server device configured to issue the electronic certificate, storing a plurality of electronic certificates corresponding to the specification for the IC chip, memorizing history information on a result of authentication using each of the electronic certificates, for each specification for the IC chip, and selecting an electronic certificate to be used for the authentication when the information is read from the IC chip in the document to be read, from the plurality of electronic certificates based on the history information.

Also in this method, when information is read from the IC chip in the document to be read, authentication is carried out using the appropriate electronic certificate selected based on the history information. Thus, the probability of successful authentication is increased. This reduces the time required for authentication using electronic certificates.

The program according to the present invention is executed by a document reader device configured to use an electronic certificate to read information from an IC chip mounted in a document; the electronic certificate allows the IC chip to authenticate the device that reads the information. The program allows a computer to execute a process of acquiring property information of the IC chip indicative of a specification for the IC chip from an information server device configured to manage the property information, a process of receiving an electronic certificate created based on the property information of the IC chip and corresponding to the specification for the IC chip, from a certificate issuing server device configured to issue the electronic certificate, a process of storing a plurality of electronic certificates corresponding to the specification for the IC chip, a process of memorizing history information on a result of authentication using each of the electronic certificates, for each specification for the IC chip, and a process of selecting an electronic certificate to be used for the authentication when the information is read from the IC chip in the document to be read, from the plurality of electronic certificates based on the history information.

Also in this program, as described above, when information is read from the IC chip in the document to be read, authentication is carried out using the appropriate electronic certificate selected based on the history information. Thus, the probability of successful authentication is increased. This reduces the time required for authentication using electronic certificates.

According to the present invention, in the document reader device configured to carry out authentication using electronic certificates when reading information from the IC chip mounted in the document, the time required for the authentication can be reduced.

A document reader device according to a first embodiment of the present invention will be described below with reference to the drawings. In the present embodiment, a document reader device used as, for example, a reader device for electronic passports is illustrated. Furthermore, in the present embodiment, a document authentication system (an authentication system for electronic passports) using such a document reader device (a reader device for electronic passports) is illustrated.

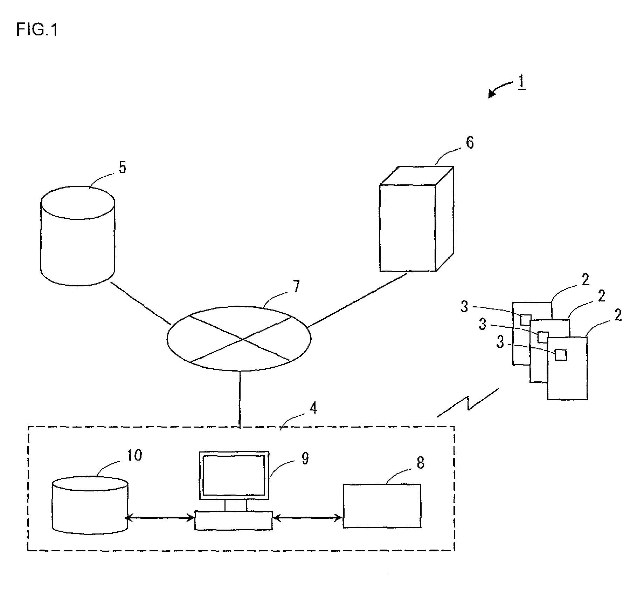

First, the configuration of the document authentication system according to the present embodiment will be described with reference to the drawings. Figure 1 is a block diagram showing the configuration of the document authentication system. As shown in Figure 1, the document authentication system 1 includes a document reader device 4 configured to read information from an IC chip 3 mounted in a document 2 (electronic passport), a certificate issuing server device 5 configured to issue electronic certificates used for authentication when information is read from the IC chip 3, and an information server device 6 configured to manage property information (described below) of the IC chip 3. The document reader device 4, the certificate issuing server device 5, and the information server device 6 are connected together via a network 7 so as to be able to communicate with one another. Furthermore, the document reader device 4 provides a function to store electronic certificates used by the IC chip 3 to authenticate the document reader device 4.

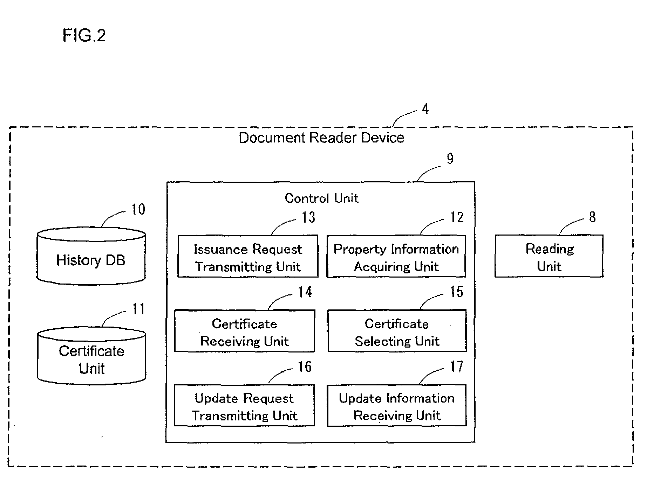

Now, the configuration of the document reader device 4 according to the present embodiment will be described with reference to the drawings. Figure 2 is a block diagram showing the configuration of the document reader device 4. As shown in Figure 2, the document reader device 4 includes a reading unit 8 providing a function to read information from a document 2 mounted in the document reader device 4, a control unit 9 configured to control operation of the document reader device 4, a history database 10 (history DB) configured to store history information, and a certificate memory 11 configured to memorize electronic certificates.

The reading unit 8 provides a function to optically read information such as characters and a photograph contained in a page of the document 2 and a function to read information recorded in the IC chip 3 in the document 2 via radio communication. Furthermore, the reading unit 8 provides a function to acquire identification information (the country name, the passport edition number, and the like) indicative of a specification for the IC chip 3 by carrying out an OCR process on the characters contained in the page (machine readable area) of the document 2.

The control unit 9 includes a property information acquiring unit 12 for acquiring the property information (the country name and passport edition number as well as a signature scheme or a signature parameter for an electronic signature) indicative of the specification for the IC chip 3 from the information server device 6. In other words, the property information includes identification information (the country name, the passport edition number, and the like) indicative of the specification for the IC chip 3.

Furthermore, the control unit 9 includes an issuance request transmitting unit 13 for transmitting a certificate issuance request to the certificate issuing server device 5, and a certificate receiving unit 14 for receiving electronic certificates from the certificate issuing server device 5. In this case, the issuance request transmitting unit 13 provides a function to create a certificate issuance request for each specification for the IC chip 3 using the property information (the country name and passport number as well as the signature scheme or signature parameter for the electronic signature) of the IC chip 3. The certificate issuing server device 5 issues the electronic certificate corresponding to the specification for the IC chip 3 based on the certificate issuance request corresponding to the specification for the IC chip 3. Thus, the certificate receiving unit 14 receives the electronic certificate corresponding to the specification for the IC chip 3 from the certificate issuing server device 5.

The certificate memory 11 is configured to store various electronic certificates (a plurality of electronic certificates corresponding to the specification for the IC chip 3) received from the certificate issuing server device 5. Furthermore, the history DB 10 memorizes history information on the results of authentication using various electronic certificates as described above.

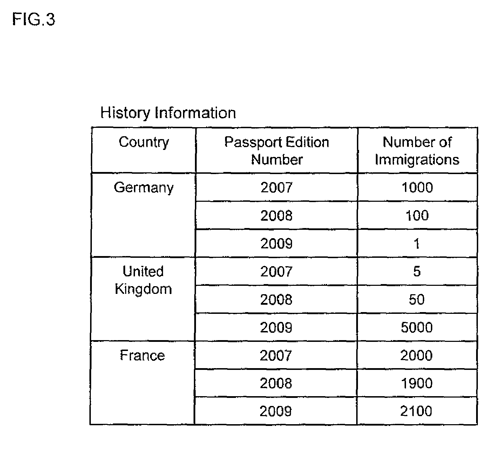

Now, the history information memorized in the history DB 10 will be described taking a specific example. Figure 3 is a diagram showing an example of history information. In the example in Figure 3, information on the results (the number of immigrations) of authentication using the various electronic certificates is associated with the identification information (the country name and the passport edition number) indicative of the specification for the IC chip 3. That is, the history information on the results of authentication using each of the electronic certificates is memorized in the history information DB for each specification for the IC chip 3.

The control unit 9 includes a certificate selecting unit 15 for selecting, based on such history information as described above, an electronic certificate to be used by the IC chip 3 in the document 2 when information is read from the IC chip 3, from the plurality of electronic certificates stored in the certificate memory 11.

The certificate selecting unit 15 provides a function to select one of the electronic certificates, based on the history information, in order of decreasing frequency (the number of immigrations) at which authentication using each electronic certificate has succeeded. For example, based on the history information in Figure 3, when one of the electronic certificates for "Germany" is selected, one of the electronic certificates is selected in order of decreasing number of immigrations, that is, in order of "2007", "2008", and "2009".

The certificate selecting unit 15 further provides a function to randomly select one of the electronic certificates based on the history information if the difference, among the electronic certificates, in the frequency (the difference in the number of immigrations) at which authentication using each electronic certificate has succeeded falls within a predetermined range (for example, within ±10%). For example, based on the history information in Figure 3, when one of the electronic certificates for "France" is selected, one of the electronic certificates "2007", "2008", and "2009" is selected in a random order.

The control unit 9 includes an update request transmitting unit 16 for transmitting an update request for updated property information to the information server device 6. The update request transmitting unit 16 transmits the update request to the information server device 6, for example, when the frequency of failures of authentication using any electronic certificate is higher than a predetermined threshold (for example, 100 times/day) and at predetermined time intervals (for example, every eight days).

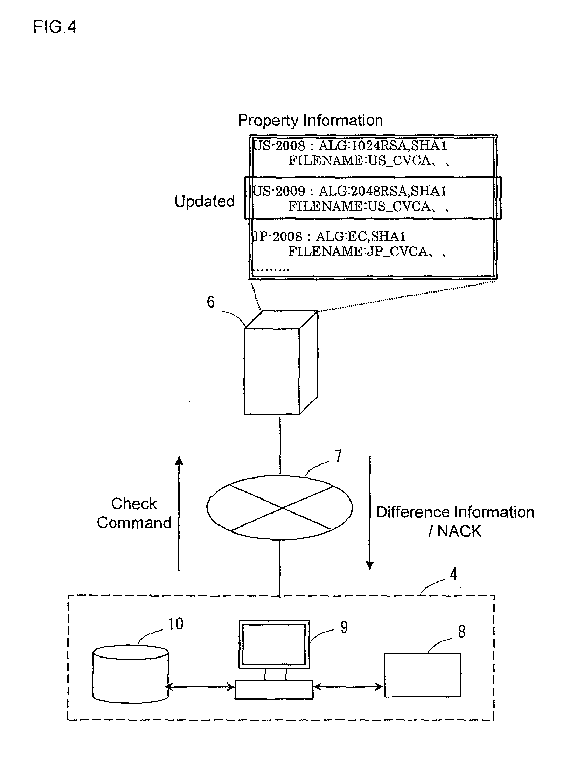

Figure 4 is a diagram showing an example in which the property information is updated by the update request transmitting unit 16. In the example illustrated in Figure 4, first, the document reader device 4 transmits, to the information server device 6, a check command (corresponding to an update request) to check whether or not the property information managed by the information server device 6 has been updated. If the property information has been updated ("Updated"), the information server device 6 returns the updated property information (difference information) to the document reader device 4. If the property information has not been updated ("No update"), the information server device 6 returns a signal (NACK) indicative of this status to the document reader device 4.

The control unit 9 further includes an updated information receiving unit 17 for receiving the updated property information from the information server device 6. For example, when the property information managed by the information server is updated, the update information receiving unit 17 receives the updated property information. That is, the update information receiving unit 17 receives the updated property information at a predetermined distribution timing specified by the information server device 6.

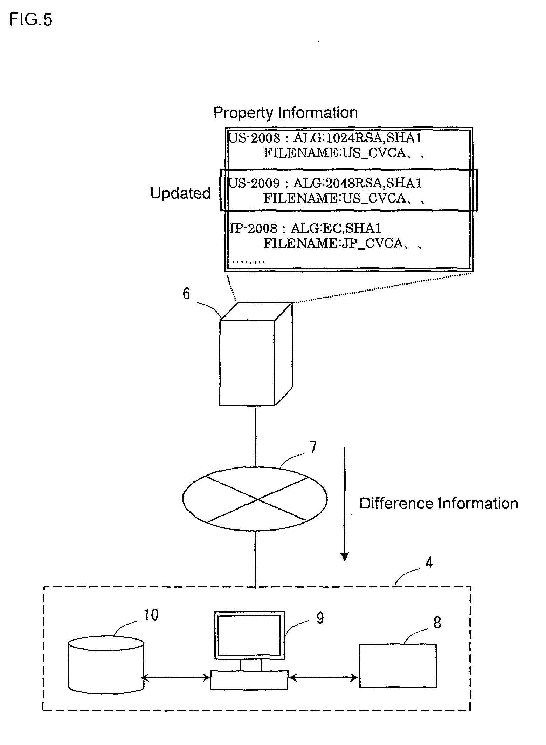

Figure 5 is a diagram illustrating an example in which the property information is updated by the updated information receiving unit 17. In the example illustrated in Figure 5, first, the information server device 6 determines whether or not the property information managed by the information server device 6 has been updated. If the property information has been updated ("Updated"), the information server device 6 returns the updated property information (difference information) to the document reader device 4.

In the document reader device 4 according to the present embodiment, the reading unit 8 and the control unit 9 may be integrated into one device (document reader device 4) or configured as separate devices (a reader and a control computer).

Operation of the document authentication system 1 configured as described above will be described with reference to the drawings. Here, an operation of carrying out authentication using electronic certificates when reading information from the IC chip 3 will be described as an operation of characteristic of the document reader device 4 according to the present invention.

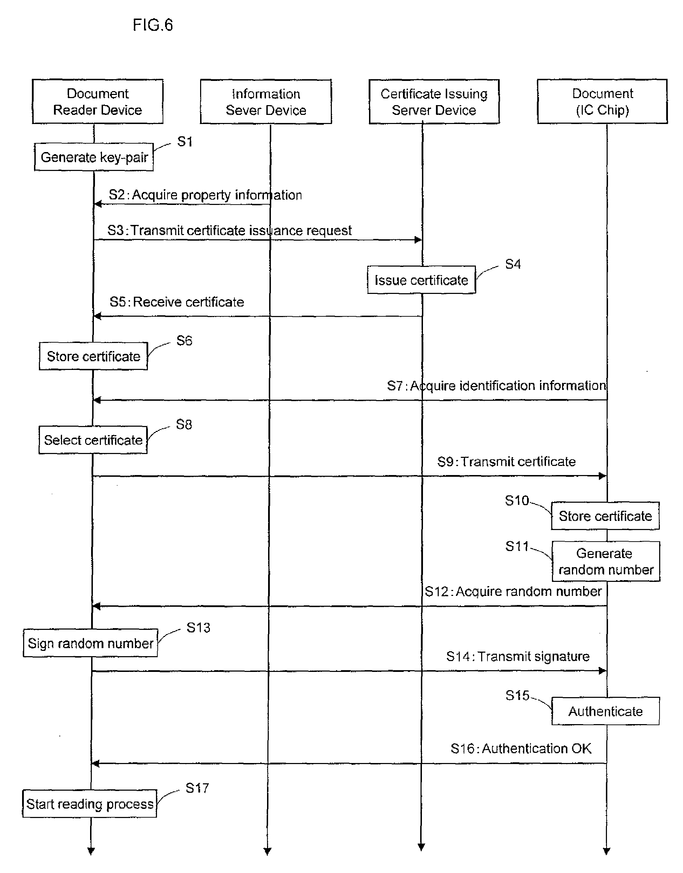

Figure 6 is a sequence diagram illustrating a flow of operation of the document authentication system 1 according to the present embodiment. As shown in Figure 6, first, the document reader device 4 generates a key pair of a secret key and a public key (S1) and acquires the property information of the IC chip 3 from the information server device 6 (S2). Then, the document reader device 4 transmits a certificate issuance request containing the public key and the property information (the signature parameter and the like) to the certificate issuing server device 5 (S3).

The certificate issuing server device 5 issues an electronic certificate using the public key and the property information (the signature parameter and the like) (S4). The certificate issuing sever device 5 then transmits the electronic certificate to the document reader device 4 (S5). The document reader device 4 stores the electronic certificate received from the information server device 6, in the certificate memory 11 (S6).

When the document 2 to be read is mounted in the reading unit 8 of the document reader device 4, the document reader device 4 optically reads a page (machine readable area) of the document 2 and carries out an OCR process on the page to acquire identification information (the country name, the passport edition number, and the like) of the IC chip 3 (S7). Then, based on the identification information of the IC chip 3 acquired from the document to be read 2 and the history information memorized in the history DB 10, the document reader device 4 selects an electronic certificate to be used by the IC chip 3 when the information is read from the IC chip 3, from the plurality of electronic certificates stored in the certificate memory 11 (S8).

The document reader device 4 transmits the selected electronic certificate to the IC chip 3 in the document 2 (S9). Then, the IC chip 3 in the document 2 stores the electronic certificate in the memory (S10). The IC chip 3 then uses a random number table or the like to generate a random number (S11), and transmits the random number to the document reader device 4 (S12).

The document reader device 4 receives the random number from the IC chip 3 in the document 2 (S12). Then, the document reader device 4 uses the secret key generated in S1 to append an electronic signature to the random number (S13). The document reader device 4 then transmits the random number with the electronic signature to the IC chip 3 in the document 2 (S14). The IC chip 3 in the document 2 receives the random number with the electronic signature from the document reader device 4. The IC chip 3 carries out authentication using the electronic certificate stored in the memory (S15).

If the authentication succeeds, the IC chip 3 in the document 2 transmits a signal (authentication OK signal) indicative of this status to the document reader device 4 (S16). The document reader device 4 receives the authentication OK signal from the IC chip 3 in the document 2. Then, the document reader device 4 starts a process of reading the information from the IC chip 3 (S17).

On the other hand, if the authentication fails, the IC chip 3 in the document 2 transmits a signal (authentication NG signal) indicative of this status to the document reader device 4. Upon receiving the authentication NG signal from the IC chip 3 in the document 2, the document reader device 4 avoids starting the process of reading the information from the IC chip 3. The document reader device 4 thus displays the guidance message "Retry with another electronic certificate", "Search another personal information database", "End" or the like on a display screen.

As described above, the document reader device 4 according to the present embodiment carries out authentication using electronic certificates when reading the information from the IC chip 3 mounted in the document 2. This enables a reduction in time required for the authentication.

That is, in the present embodiment, when the information is read from the IC chip 3 in the document 2 to be read, authentication is carried out using the appropriate electronic certificate selected based on the history information. Thus, the probability of successful authentication is increased. This reduces the time required for authentication using electronic certificates.

In this case, authentication is carried out using one of the electronic certificates selected in order of decreasing frequency of successes of authentication using each electronic certificate. Thus, the probability of successful authentication is increased. This reduces the time required for authentication using electronic certificates. Furthermore, if the difference, among the electronic certificates, in the frequency of successes of authentication using each electronic certificate falls within a predetermined range, the authentication is carried out using the randomly selected electronic certificate.

Furthermore, in the present embodiment, when the property information of the IC chip 3 is updated, the updated property information can be acquired by transmitting the update request to the information server device 6. This enables authentication using a new electronic certificate corresponding to the updated property information. For example, the updated property information can be appropriately acquired if the frequency of failures of authentication using any electronic certificate increases (the corresponding property information may be outdated).

Additionally, in the present embodiment, when the property information of the IC chip 3 is updated, the document reader device 4 can receive the property information (updated property information) distributed by the information server device 6 at a predetermined distribution timing. This enables authentication using a new electronic certificate corresponding to the updated property information. For example, if the property information managed by the information server is updated, the document reader device 4 can also appropriately acquire the updated property information.

The embodiment of the present invention has been described above by illustration. However, the scope of the present invention is not limited to the embodiment. The embodiment may be changed or varied according to any purpose within the scope set forth in the claims.

For example, in the case illustrated in the above description, the document 2 is a passport. However, the scope of the present invention is not limited to this aspect. Examples of the document 2 include a passbook for a financial institute and an identification card.

### (Second Embodiment)

In order to allow information to be read from the latest electronic passport, country-oriented information needs to be updated in response to revision of the electronic passport. However, for the conventional reader device, no consideration has been made for management of the update. For example, an operator may perform an update operation individually on reader devices. However, if a particularly large number of reader devices are installed, this update operation is inefficient. Thus, the updating has been desired to be made more efficient.

In the present embodiment, in order to solve such a problem, an update management system is provided which allows efficient updating of an electronic certificate used for an authentication process when information is read from an IC chip in a document.

The update management system according to the present embodiment includes a plurality of document reader devices configured to allow authentication to be carried out between each of the document reader devices and an IC chip mounted in a document, using an electronic certificate corresponding to a specification for the IC chip, when information is read from the IC chip, and an update management device configured to manage updating of the electronic certificate used for the authentication process. The update management device includes a certificate receiving unit for receiving, instead of the plurality of document reader devices, an electronic certificate updated in response to an update of the specification for the IC chip, in a centralized manner from a certificate issuing server device configured to issue electronic certificates, and a certificate transmitting unit for transmitting the updated electronic certificate to each of the plurality of document reader devices.

In this configuration, the update management device receives the updated electronic certificate instead of the plurality of document reader devices in a centralized manner and transmits the electronic certificate to each of the document reader devices. Thus, the update management device manages updating of electronic certificates in a centralized manner. This enables the electronic certificates to be efficiently updated compared to the case where the plurality of document reader devices individually acquire the updated electronic certificate.

Furthermore, in the update management system according to the present embodiment, the update management device includes an update checking unit for checking whether or not any electronic certificate has been updated in response to an update of the specification for the IC chip, via an information server device configured to manage information on the specification for the IC chip, and an issuance requesting unit configured such that if any electronic certificate has been updated, the issuance requesting unit requests the certificate issuing server device to issue the updated electronic certificate.

This configuration can check, via the information server device, whether or not any electronic certificate has been updated, and if any electronic certificate has been updated, request the certificate issuing server device to issue the electronic certificate, to acquire the updated electronic certificate. Thus, when any electronic certificate is updated in response to an update of the specification for the IC chip, the latest electronic certificate (updated electronic certificate) can be immediately obtained.

Furthermore, in the update management system according to the present embodiment, the update management device may include a storing unit for storing updated electronic certificates received from the certificate issuing server device.

In this configuration, when an updated electronic certificate is received from the certificate issuing server device, the electronic certificate can be stored. Thus, for example, even if a document reader device is added to the system, the latest electronic certificate (updated electronic certificate) can be immediately transmitted to the added document reader device without the need to receive the electronic certificate from the certificate issuing server device again.

Furthermore, in the update management system according to the present invention, the update management device includes a command transmitting unit for transmitting a forcible update command to request the document reader device to forcibly update an electronic certificate and a secret key, and a key pair generating unit for generating a key pair including a public key used to issue the updated electronic certificate and the secret key used for an authentication process using the updated electronic certificate. The certificate transmitting unit may be configured to transmit the secret key to the document reader device together with the updated electronic certificate.

In this configuration, the update management device can transmit the forcible update command to the document reader device to forcibly update the electronic certificate and secret key for the document reader device. In this case, the update management device generates the key pair including the public key used to issue the updated electronic certificate and the secret key used for the authentication process using the updated electronic certificate. The secret key is transmitted to the document reader device together with the updated electronic certificate. Then, the document reader device forcibly updates the electronic certificate and the secret key based on the forcible update command.

Furthermore, in the update management system according to the present embodiment, the update management device may include a use order determining unit for determining the use order of electronic certificates used by the document reader device to read information from the IC chip mounted in the document, based on log information on successes and failures of the authentication process received from each of the document reader devices.

This configuration determines the use order of the electronic certificates used by the document reader device based on the log information on successes and failures of the authentication process. Thus, the probability of successful authentication is increased. This reduces the time required for authentication using electronic certificates.

Furthermore, in the update management system according to the present embodiment, the update checking unit may be configured to periodically check whether or not any electronic certificate has been updated.

This configuration can periodically check whether or not any electronic certificate has been updated, and if any electronic certificate has been updated in response to an update of the specification for the IC chip, immediately obtain the latest electronic certificate (updated electronic certificate).

Additionally, in the update management system according to the present embodiment, the update checking unit may be configured to check whether or not any electronic certificate has been updated if the frequency of failures of the authentication process using any electronic certificate increases above a predetermined threshold.

In this configuration, if the frequency of failures of the authentication process using any electronic certificate increases (the electronic certificate may be outdated), the latest electronic certificate (updated electronic certificate) can be immediately obtained.

In addition, in the update management system according to the present embodiment, the certificate receiving unit may be configured such that when the information on the specification for the IC chip managed by the information server device is updated, the certificate receiving unit receives the updated electronic certificate.

In this configuration, when the information on the specification for the IC chip managed by the information server device is updated, the latest electronic certificate (updated electronic certificate) can be immediately obtained.

The update management device according to the present embodiment manages updating of electronic certificates used for the authentication process carried out between the IC chip mounted in the document and the document reader device when the information is read from the IC chip. The update management device includes the certificate receiving unit for receiving, instead of the plurality of document reader devices, an electronic certificates updated in response to an update of the specification for the IC chip, in a centralized manner from the certificate issuing server device configured to issue electronic certificates, and the certificate transmitting unit for transmitting the updated electronic certificate to each of the plurality of document reader devices.

Also in this device, the update management device manages updating of the electronic certificates in a centralized manner as described above. This enables the electronic certificates to be efficiently updated compared to the case where the plurality of document reader devices individually acquire the updated electronic certificate.

Furthermore, the update management device according to the present embodiment may include the use order determining unit for determining the use order of the electronic certificates used by the document reader device to read information from the IC chip mounted in the document, based on the log information on successes and failures of the authentication process received from each of the document reader device.

This configuration determines the use order of the electronic certificates used by the document reader device based on the log information on successes and failures of the authentication process. Thus, the probability of successful authentication is increased. This reduces the time required for authentication using electronic certificates.

An update management method according to the present embodiment manages updating of the electronic certificates used for the authentication process carried out between the IC chip mounted in the document and the document reader device when the information is read from the IC chip. The update management method includes the update management device receiving an electronic certificate updated in response to an update of the specification for the IC chip, in a centralized manner instead of the plurality of document reader devices, and the update management device transmitting the updated electronic certificate to each of the plurality of document reader devices.

This method also manages updating of the electronic certificates in a centralized manner as described above. This enables the electronic certificates to be efficiently updated compared to the case where the plurality of document reader devices individually acquire the updated electronic certificate.

Furthermore, the update management method according to the present embodiment may include determining, by the update management device, the use order of the electronic certificates used by the document reader device to read information from the IC chip mounted in the document, based on the log information on successes and failures of the authentication process received from each of the document reader device.

This method determines the use order of the electronic certificates used by the document reader device based on the log information on successes and failures of the authentication process. Thus, the probability of successful authentication is increased. This reduces the time required for authentication using electronic certificates.

The update management system according to the present embodiment will be described below with reference to the drawings. In the present embodiment, for example, an update management system for a reader device (document reader device) for electronic passports is illustrated. The update management system manages updating of the electronic certificates (each electronic certificate is updated in response to an update of the specification for the IC chip in the document) used for the authentication process when information is read from the IC chip in the document.

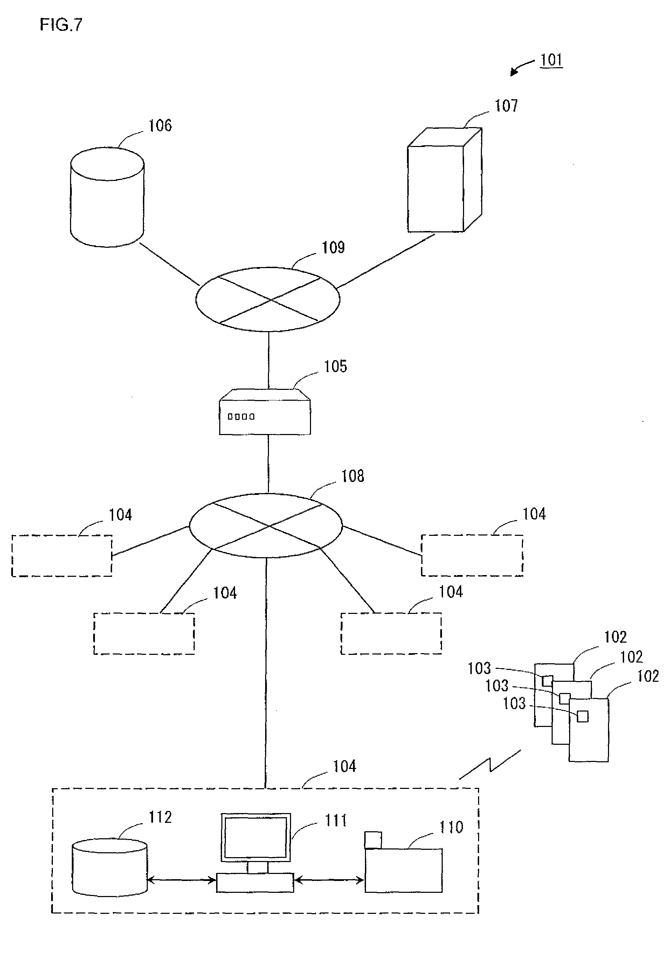

The configuration of the update management system according to the second embodiment will be described with reference to the drawings. Figure 7 is a block diagram showing the update management system according to the second embodiment. Here, the configuration of the whole system will be described with reference to Figure 7. As shown in Figure 7, an update management system 101 includes a plurality of document reader devices 104 configured to read information from an IC chip 103 mounted in a document 102 (electronic passport), an update management device 105 configured to manage updating of electronic certificates used for an authentication process when information is read from the IC chip 103, a certificate issuing server device 106 configured to issue electronic certificates, and an information server device 107 configured to manage information on the specification for the IC chip 103 (property information, for example, the country name, the passport number, and the signature scheme or signature parameter for the electronic signature).

The plurality of document reader devices 104 and the update management device 105 are connected together via a local network 108 (for example, a LAN network) so as to be able to communicate with one another. Furthermore, the update management device 105, the certificate issuing server device 106, and the information server device 107 are connected together via a common network 109 (for example, the Internet) so as to be able to communicate with one another. In the example described below, the plurality of document reader devices 104 communicate directly with the update management device 105. However, instead of the plurality of document reader devices 104, a slave device (the update management device 105 serves as a master device for the slave device) may be provided to construct what is called a layered structure.

Now, the configuration of the document reader device 104 will be described. As shown in Figure 7, the document reader device 104 includes a reading unit 110 having a function to read information from the document 102 mounted in the document reader device 104, a control unit 111 for controlling operation of the document reader device 104, and a certificate memory 112 for storing electronic certificates used by the IC chip 103 to authenticate the document reader device 104.

The reading unit 110 provides a function to optically read information such as characters and a photograph contained in a page of the document 102 and a function to read, via radio communication, information recorded in the IC chip 103 in the document 102. The reading unit 110 also provides a function to carry out an OCR process on the characters contained in the page (machine readable area) of the document 102 to acquire identification information (the country name, the passport number, and the like) indicative of the specification for the IC chip 103. The certificate memory 112 is configured to store electronic certificates (a plurality of electronic certificates corresponding to the specification for the IC chip 103) received from the certificate issuing server device 106 via the update management device 105 as described below.

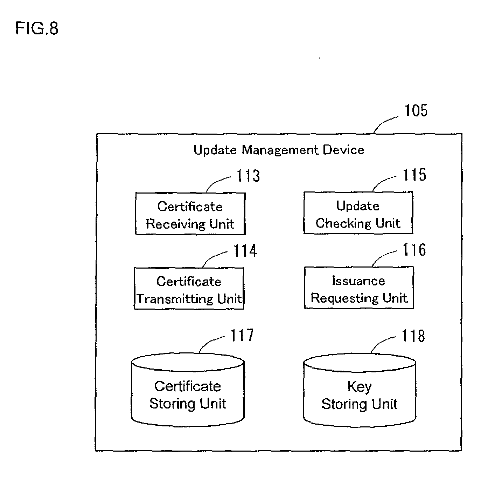

Subsequently, the configuration of the update management device 105 will be described with reference to Figure 8. The update management device 105 according to the second embodiment provides a function to update and manage certificates for the respective document reader devices 104. Figure 8 is a block diagram showing the configuration of the update management device 105 according to the present embodiment. As shown in Figure 8, the update management device 105 according to the present invention includes a certificate receiving unit 113 for receiving, instead of the plurality of document reader devices 104, an updated electronic certificate from the certificate issuing server device 106 in a centralized manner, and a certificate transmitting unit 114 for transmitting the updated electronic certificate (which has been received from the certificate issuing server device 106) to each of the plurality of document reader devices 104.

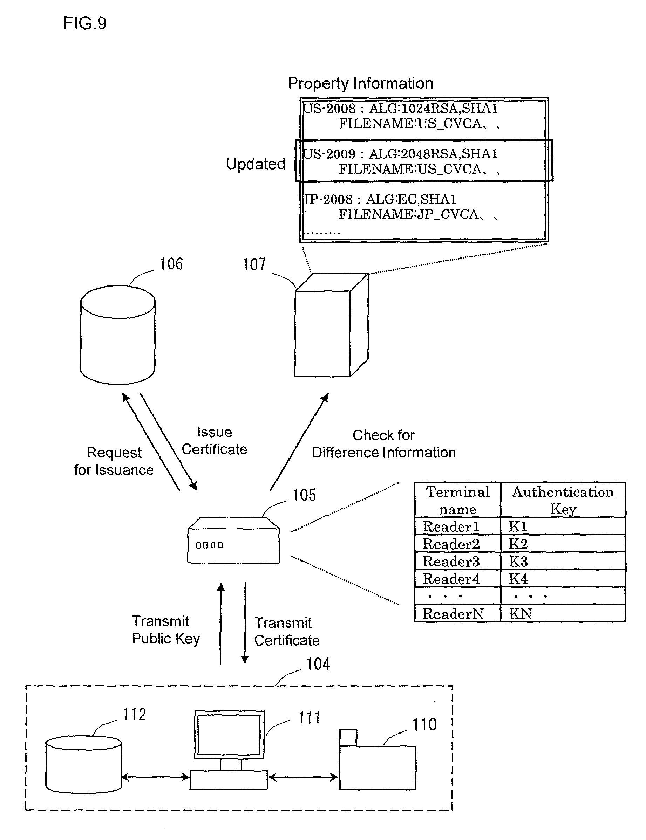

Furthermore, the update management device 105 includes an update checking unit 115 for checking, via the information server device 107, whether or not any electronic certificate has been updated (whether or not any piece of the property information has been updated), and an issuance requesting unit 116 configured such that if any electronic certificate has been updated (if any piece of the property information has been updated (this piece of information corresponds to difference information)), the issuance requesting unit 116 requests the certificate issuing server device 106 to issue the updated electronic certificate (see Figure 9).

Whether or not any electronic certificate has been updated (whether or not there is any difference information) can be carried out in various patterns. For example, the update checking unit 115 may periodically (for example, every eight days) check whether or not any electronic certificate has been updated (whether or not there is any difference information). Furthermore, the update management device 105 may receive log information on successes and failures of an authentication process using each electronic certificate, from each of the document reader devices 104 and if the frequency of failures of the authentication process using any electronic certificate is higher than a predetermined threshold level, check whether or not any electronic certificate has been updated (whether or not there is any difference information).

Specifically, whether or not there is any difference information may be checked when the highest frequency (peak value), in all the document reader devices 104, of failures of the authentication process is higher than a predetermined threshold (for example, 100 times/day). Alternatively, whether or not there is any difference information may be checked when the sum of the frequencies of failures in all the document reader devices 104 is greater than a predetermined threshold (for example, 500 times/day). Alternatively, whether or not there is any difference information may be checked when the frequency of failures in a particular document reader device 104 (a document reader device 104 installed in an important place or a document reader device 104 with a high throughput) is higher than a predetermined threshold (for example, 100 times/day). Alternatively, whether or not there is any difference information may be checked when the weighted sum of the frequencies of failures (for example, the sum of the frequencies of failures in all the document reader devices 104 excluding the maximum and minimum values) is greater than a predetermined threshold (for example, 300 times/day).

Alternatively, when the information on the specification for the IC chip 103 managed by the information server device 107 is updated, the update management device 105 may receive a notification of start of provision of difference information from the information server device 107 and use the notification as a trigger to check whether or not there is any difference information. Alternatively, whether or not there is any difference information may be checked using an operator's operation as a trigger. These patterns in which whether or not there is any difference information is checked may be carried out exclusively for countries that meet relevant conditions.

Moreover, the update management device 105 includes a certificate storing unit 117 for storing updated electronic certificate received from the certificate issuing server device 106 and a key storing unit 118 for storing authentication keys used for the authentication process between the update management device 105 and each of the document reader devices 104. Different authentication keys are prepared for the respective document reader devices 104 (see Figure 9) and shared by the update management device 105 and each of the document reader devices 104. The key storing unit 118 is formed of, for example, a secure access module.

Operation of the update management system 101 according to the second embodiment configured as described above will be described with reference to the drawings. Here, as an operation characteristic of the update management system 101 according to the present invention, an operation of updating an electronic certificate will be described.

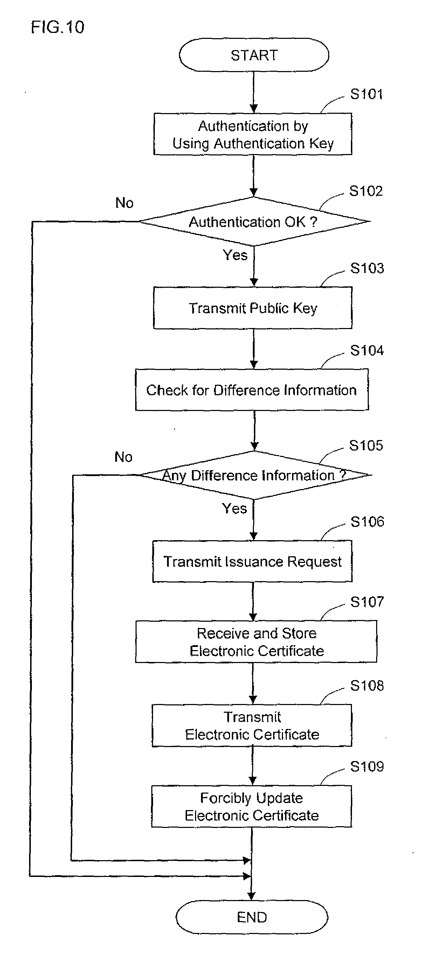

Figure 10 is a flow diagram showing a flow of operation of the update management system 101 according to the present embodiment. As shown in Figure 10, first, an authentication process using an authentication key is carried out between the update management device 105 and each of the document reader devices 104 (S101). When the result of the authentication is OK (S102), each of the document reader device 104 transmits its public key to the update management device 105 (S103). The update management device 105 communicates with the information server device 107 to check whether or not any piece of the property information has been updated (whether or not there is any difference information) (S104).

If there is any difference information (S105), the update management device 105 transmits a request for issuance of the corresponding electronic certificate to the certificate issuing server device 106 instead of all the document reader devices 104 (S106). The issuance request contains the public key received by the update management device 105 from each of the corresponding document reader devices 104. The issuance request also contains the property information (difference information) received from information server device 107 by the update management device 105. The certificate issuing server device 106 issues the electronic certificate (updated electronic certificate) using the public key and property information (difference information) received from the update management device 105.

Upon receiving the electronic certificate issued by the certificate issuing server device 106, the update management device 105 stores (caches) the electronic certificate in the certificate storing unit 117 (S107). The update management device 105 further transmits the electronic certificate to each of the document reader devices 104 (S108). Thus, each of the plurality of document reader devices 104 can acquire the updated electronic certificate via the update management device 105. Upon receiving the electronic certificate from the update management device 105, the document reader device 104 forcibly updates the electronic certificate (S109).

The update management system 101 according to the second embodiment described above includes the update management device 105 configured to manage updating of the electronic certificates in a centralized manner. This allows the electronic certificates to be efficiently updated compared to the case where the plurality of document reader devices 104 individually acquire the updated electronic certificate.

That is, in the present embodiment, the update management device 105 receives the updated electronic certificate instead of the plurality of document reader devices 104 in a centralized manner, and transmits the electronic certificate to each of the document reader devices 104. Thus, the update management device 105 manages updating of the electronic certificates in a centralized manner. This allows the electronic certificates to be efficiently updated compared to the case where the plurality of document reader devices 104 individually acquire the updated electronic certificate.

Furthermore, the present embodiment can check, via the information server device 107, whether or not any electronic certificate has been updated, and if any electronic certificate has been updated, request the certificate issuing server device 106 to issue the electronic certificate, to acquire the updated electronic certificate. Thus, when any electronic certificate is updated in response to an update of the specification for the IC chip 103, the latest electronic certificate (updated electronic certificate) can be immediately obtained.

Furthermore, in the present embodiment, the updated electronic certificate received from the certificate issuing server device 106 can be stored. Thus, for example, even if the document reader device 104 is added to the system, the latest electronic certificate (updated electronic certificate) can be immediately transmitted to the added document reader device 104 without the need to receive the electronic certificate from the certificate issuing server device 106 again.

Furthermore, the present embodiment can periodically check, via the information server device 107, whether or not any electronic certificate has been updated, and when any electronic certificate is updated in response to an update of the specification for the IC chip 103, immediately obtain the latest electronic certificate (updated electronic certificate).

Furthermore, in the present embodiment, if the frequency of failures of the authentication process using any electronic certificate increases (the electronic certificate may be outdated), the latest electronic certificate (updated electronic certificate) can be immediately obtained.

In addition, in the present embodiment, if the information on the specification for the IC chip 103 managed by the information server device 107 is updated, the updated electronic certificate (updated electronic certificate) can be immediately received.

### (Third Embodiment)

Now, the update management system 101 according to a third embodiment will be described. Here, mainly the differences in update management system 101 between the third embodiment and the second embodiment will be described. Thus, unless otherwise specified, the configuration and operation of the third embodiment are similar to those of the second embodiment.

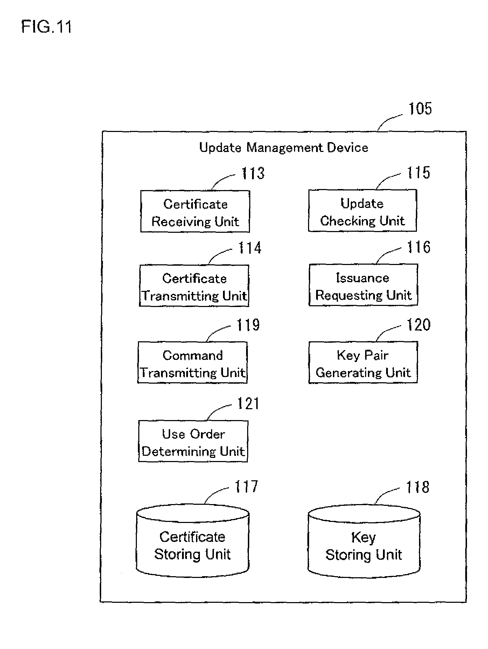

The update management device 105 according to the third embodiment provides a function to forcibly update the certificate and secret key for each document reader device 104 in addition to the function to update and manage the certificate for the document reader device 104. Figure 11 is a block diagram showing the configuration of the update management device 105 according to the present embodiment. As shown in Figure 11, the update management device 105 according to the present embodiment further includes a command transmitting unit 119 and a key pair generating unit 120.

The command transmitting unit 119 has a function of transmitting a forcible update command to request the document reader device 104 to forcibly update the electronic certificate and the secret key. The key pair generating unit 120 provides a function to generate a key pair including a public key used to issue an updated electronic certificate and a secret key used for an authentication process using the updated electronic certificate.

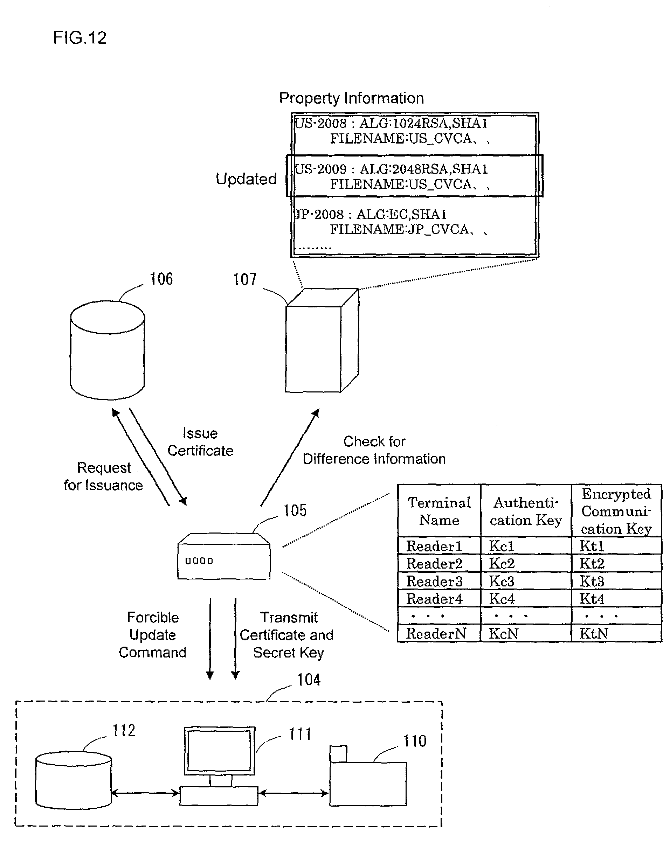

Furthermore, the certificate transmitting unit 114 according to the present embodiment provides a function to transmit the secret key to the document reader device 104 together with the updated electronic certificate. Moreover, the key storing unit 118 according to the present embodiment is configured to store authentication keys used for the authentication process between the update management device 105 and the document reader device 104, and encrypted communication keys used for the encrypted communication between the update management device 105 and the document reader device 104. Different authentication keys and different encrypted communication keys are prepared for the respective document reader devices 104 (see Figure 12) and shared by the update management device 105 and each of the document reader devices 104.

Moreover, the update management device 105 includes a use order determining unit 121 for determining the use order (use priority order) of electronic certificates used by the document reader device 104 to read information from the IC chip 103 mounted in the document 102, based on log information on successes and failures of the authentication process received from each of the document reader devices 104. The use order determining unit 121 determines the use priority order, for example, such that the electronic certificates are used in order of decreasing frequency of successes of the authentication process. Furthermore, the use order determining unit 121 determines the use priority order such that the electronic certificates are randomly used if the difference, among the electronic certificates, in the frequency of successes of the authentication process falls within a predetermined range. Thus, the probability of successful authentication is increased. This reduces the time required for authentication using electronic certificates.

Operation of the update management system 101 according to the third embodiment configured as described above will be described with reference to the drawings. Processing according to the present embodiment (processing from S110 to S120 described below) replaces step 109 (S109) according to the second embodiment and is carried out as a series of operations.

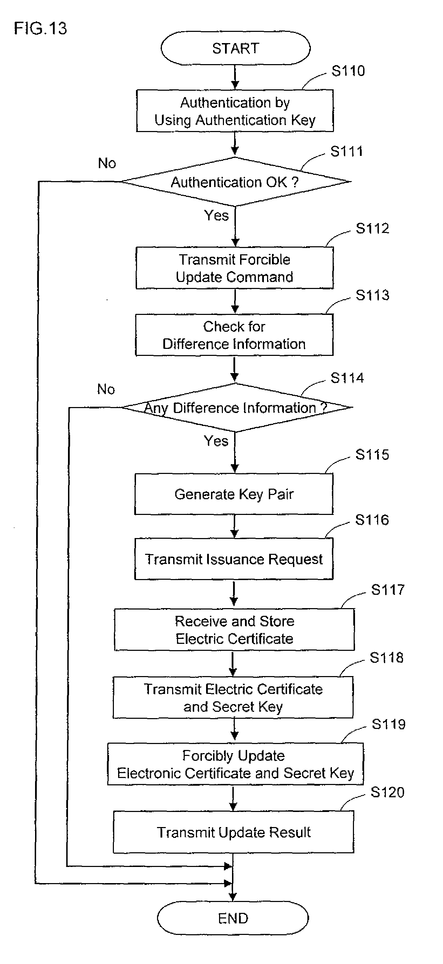

Figure 13 is a flowchart illustrating a flow of operation of the update management system 101 according to the present embodiment. As illustrated in Figure 13, first, an authentication process using the authentication key is carried out between the update management device 105 and each document reader device 104 (S110). If the result of the authentication is OK (S111) , the update management device 105 transmits the forcible update command to each document reader device 104 (S112). Then, the update management device 105 communicates with the information server device 107 to check whether or not any piece of the property information has been updated (whether or not there is any difference information) (S113).

If there is any difference information (S114), the update management device 105 generates an updating key pair (a public key and a secret key) (S115) and transmits a request for issuance of the corresponding electronic certificate to the certificate issuing server device 106 (S116), instead of all the document reader devices 104. The issuance request contains the public key generated by the update management device 105 instead of each of the corresponding document reader devices 104. The issuance request also contains the property information (difference information) received from the information server device 107 by the update management device 105. The certificate issuing server device 106 issues the electronic certificate (updated electronic certificate) using the public key and property information (difference information) received from the update management device 105.

Upon receiving the electronic certificate issued by the certificate issuing server device 106, the update management device 105 stores (caches) the electronic certificate in the certificate storing unit 117 (S117). The update management device 105 further transmits the electronic certificate to each of the document reader devices 104 together with the secret key generated by the update management device 105 instead of the document reader devices 104 (S118). In this case, the electronic certificate and the secret key are encrypted using the encrypted communication key before being transmitted to each document reader device 104. The document reader device 104 then decodes the data received from the update management device 105 to acquire the secret key and the electronic certificate. Then, the secret key and the electronic certificate are forcibly updated (S119). Finally, the document reader device 104 transmits an update result (update success/update failure) to the update management device 105 (S120).

The order of the authentication using the authentication key (S110), the transmission of the forcible update command (S111), and the acquisition of the electronic certificate (S113 to S117) may be optionally changed.

The update management system 101 according to the third embodiment as described above also exerts effects similar to those of the second embodiment.

Furthermore, in the present embodiment, the update management device 105 can transmit the forcible update command to the document reader device 104 to forcibly update the electronic certificate and secrete key in the document reader device 104. In this case, the update management device 105 generates the key pair including the public key used to issue the updated electronic certificate and the secret key used for the authentication process using the updated electronic certificate. The secret key is transmitted to the document reader device 104 together with the updated electronic certificate. Then, the document reader device 104 forcibly updates the electronic certificate and the secret key based on the forcible update command.

The embodiments of the present invention have been described above by illustration. However, the scope of the present invention is not limited to the embodiments. The embodiments may be changed or varied according to any purpose within the scope set forth in the claims.

For example, for countries failing to have the information server device 107 (failing to provide property information otherwise offered by the information server device 107) and providing only electronic certificates issued by the certificate issuing server device 106, the update management device 105 may receive the electronic certificate from the certificate issuing server device 106 and then transmit the electronic certificate to the document reader device 104, periodically or using the operator's operation as a trigger.

Furthermore, for countries involving no response from the information server device 107 and providing only electronic certificates issued by the certificate issuing server device 106, the update management device 105 may receive the electronic certificate from the certificate issuing server device 106 and then transmit the electronic certificate to the document reader device 104, periodically on using the operator's operation as a trigger.

Additionally, for countries failing to have the information server device 107 (failing to provide property information otherwise offered by the information server device 107) and providing electronic certificates only offline, the update management device 105 may transmit the electronic certificate obtained offline to the document reader device 104.

In addition, countries involving only one type of electronic certificate do not require the information server device 107. In this case, the update management device 105 may receive the electronic certificate from the certificate issuing server device 106 and then transmit the electronic certificate to the document reader device 104, periodically or using the operator's operation as a trigger.

If the electronic certificate has a layered structure, a plurality of electronic certificates forming a chain of a series of electronic certificates correspond to the electronic certificate corresponding to the present invention. One of the plurality of electronic certificates forming the electronic certificate chain may be a root certificate.

Furthermore, in the case illustrated in the above description, the document 102 is a passport. However, the scope of the present invention is not limited to this aspect. Examples of the document 102 include a passbook for a financial institute and an identification card.

The currently possible preferred embodiments of the present invention have been described. It should be appreciated that many variations may be made to the present embodiments. The accompanying claims are intended to embrace all such variations falling within the true spirit and scope of the present invention.

### Industrial Applicability

As described above, the document reader device according to the present invention is effective for enabling a reduction in the time required for authentication, and is thus useful as, for example, a reader device for electronic passports.

### Reference Signs List

- 1: Document authentication system
- 2: Document
- 3: IC chip
- 4: Document reader device
- 5: Certificate issuing server device
- 6: Information server device
- 7: Network
- 8: Reading unit
- 9: Control unit
- 10: History database
- 11: Certificate memory
- 12: Property information acquiring unit
- 13: Issuance request transmitting unit
- 14: Certificate receiving unit
- 15: Certificate selecting unit
- 16: Update request transmitting unit
- 17: Update information receiving unit
- 101: Update management system
- 102: Document
- 103: IC chip
- 104: Document reader device
- 105: Update management device
- 106: Certificate issuing server device
- 107: Information server device
- 108: Local network
- 109: Common network
- 110: Reading unit
- 111: Control unit
- 112: Certificate memory
- 113: Certificate receiving unit
- 114: Certificate transmitting unit
- 115: Update checking unit
- 116: Issuance requesting unit
- 117: Certificate storing unit
- 118: Key storing unit
- 119: Command transmitting unit
- 120: Key pair generating unit

## Claims

1. A document reader device which uses an electronic certificate to read information from an IC chip mounted in a document, the electronic certificate allowing the IC chip to authenticate the device that reads the information, **characterized by** comprising:
a property information acquiring unit which acquires, from an information server device which manages the property information, property information of the IC chip indicative of a specification for the IC chip;
a certificate receiving unit which receives, from a certificate issuing server device which issues the electronic certificate, an electronic certificate created based on the property information of the IC chip and corresponding to the specification for the IC chip,;
a certificate storing unit which stores a plurality of electronic certificates corresponding to the specification for the IC chip;
a history storing unit which stores, for each specification of the IC chip, history information about a result of authentication using each of the electronic certificates; and
a certificate selecting unit which selects, from the plurality of electronic certificates based on the history information, an electronic certificate to be used for the authentication when the information is read from the IC chip in the document to be read.

2. The document reader device according to Claim 1, **characterized in that** the certificate selecting unit selects one of the electronic certificates in order of decreasing frequency of successes of authentication using each of the electronic certificates.

3. The document reader device according to Claim 1, **characterized in that** the certificate selecting unit randomly selects one of the electronic certificates when a difference in the frequency of successes of the authentication using each of the electronic certificates falls within a predetermined range.

4. The document reader device according to Claim 1, **characterized in that** the property information includes a signature parameter or a signature scheme for an electronic signature which the IC chip is able to process, and
the document reader device comprises:
an update request transmitting unit which transmits an update request for the updated property information to the information server device.

5. The document reader device according to Claim 4, **characterized in that** the update request transmitting unit transmits the update request when the frequency of failures of the authentication using each of the electronic certificates is higher than a predetermined threshold.

6. The document reader device according to Claim 1, **characterized in that** the property information includes a signature parameter or a signature scheme for an electronic signature which the IC chip is able to process, and
the document reader device comprises:
an update information receiving unit which receives the updated property information from the information server device at a predetermined distribution timing specified by the information server device.

7. The document reader device according to Claim 6, **characterized in that** the update information receiving unit receives, when the property information managed by the information server is updated, the updated property information.

8. A document authentication method carried out using an electronic certificate in order to read information from an IC chip mounted in a document, the electronic certificate allowing the IC chip to authenticate a device that reads the information, **characterized by** comprising:
acquiring, from an information server device which manages the property information, property information of the IC chip indicative of a specification for the IC chip;
receiving, from a certificate issuing server device which issues the electronic certificate, an electronic certificate created based on the property information of the IC chip and corresponding to the specification for the IC chip;
storing a plurality of electronic certificates corresponding to the specification for the IC chip;
memorizing, for each specification for the IC chip, history information about a result of authentication using each of the electronic certificates; and
selecting, from the plurality of electronic certificates based on the history information, an electronic certificate to be used for the authentication when the information is read from the IC chip in the document to be read.

9. A program executed in a document reader device which uses an electronic certificate to read information from an IC chip mounted in a document, the electronic certificate allowing the IC chip to authenticate the device that reads the information, **characterized by** allowing a computer to execute:
a process of acquiring, from an information server device which manages the property information, property information of the IC chip indicative of a specification for the IC chip;
a process of receiving, from a certificate issuing server device which issues the electronic certificate, an electronic certificate created based on the property information of the IC chip and corresponding to the specification for the IC chip;
a process of storing a plurality of electronic certificates corresponding to the specification for the IC chip;
a process of memorizing, for each specification for the IC chip, history information about a result of authentication using each of the electronic certificates; and
a process of selecting, from the plurality of electronic certificates based on the history information, an electronic certificate to be used for the authentication when the information is read from the IC chip in the document to be read.
